(19) Europäisches Patentamt
European Patent Office
Office européen des brevets

(11) Veröffentlichungsnummer : **0 048 341**
**B1**

(12) # EUROPÄISCHE PATENTSCHRIFT

(45) Veröffentlichungstag der Patentschrift : **18.01.84**

(51) Int. Cl.³ : **C 01 B 25/41**

(21) Anmeldenummer : **81106452.6**

(22) Anmeldetag : **19.08.81**

(54) **Verfahren zur Herstellung von granulierten Alkalidi- oder -triphosphaten.**

(30) Priorität : **23.09.80 DE 3035820**

(43) Veröffentlichungstag der Anmeldung : **31.03.82 Patentblatt 82/13**

(45) Bekanntmachung des Hinweises auf die Patenterteilung : **18.01.84 Patentblatt 84/03**

(84) Benannte Vertragsstaaten : **AT BE DE FR GB IT NL SE**

(56) Entgegenhaltungen :
**DE-A- 2 046 658**
**DE-A- 2 454 448**
**DE-A- 2 515 141**
**DE-A- 2 754 312**
**DE-C- 2 008 495**
**FR-A- 1 531 764**
**GB-A- 1 321 228**
**US-A- 3 354 092**

(73) Patentinhaber : **HOECHST AKTIENGESELLSCHAFT**
**Postfach 80 03 20**
**D-6230 Frankfurt am Main 80 (DE)**

(72) Erfinder : **Maurer, Alexander, Dr.**
**Am grünen Weg 7**
**D-5030 Hürth (DE)**
Erfinder : **Adrian, Renate**
**Grosse Ölbruchstrasse 29**
**D-5030 Hürth (DE)**
Erfinder : **Panter, Herbert**
**Brunnenstrasse 35**
**D-5030 Hürth (DE)**
Erfinder : **Heymer, Gero, Dr.**
**Fasanenaue 12**
**D-5042 Erftstadt (DE)**
Erfinder : **Nölker, Dieter**
**Franz-Rüth-Strasse 6a**
**D-5042 Erftstadt (DE)**

**EP 0 048 341 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von granulierten Alkalidi- oder -triphosphaten

Natriumtriphosphat, im folgenden als NTPP bezeichnet, wird üblicherweise durch Erhitzen einer wässerigen Lösung oder Suspension verschiedener Natriumorthophosphate mit einem molaren Na/P-Verhältnis von 5 : 3 auf Temperaturen über 250 °C hergestellt. Dabei bedient man sich zweier Verfahrensweisen, nämlich Sprühtrocknen der Orthophosphatlösung in einem Sprühturm oder Trocknen und Calcinieren der Phosphatlösung im Drehrohr. Beide Verfahren führen zu reinem wasserfreien Natriumtriphosphat, allerdings in Pulverform. In gleicher Weise wird bei einem Na : P-Verhältnis der Orthophosphatlösung von 2 : 1 Tetranatriumdiphosphat, im folgenden als TNPP bezeichnet, gewonnen. Beide Produkte spielen als Builder in Waschmitteln eine große Rolle.

In jüngerer Zeit wird von Seiten der Waschmittelindustrie zunehmend granuliertes NTPP bzw. TNPP gewünscht. Die granulierten Produkte bieten Vorteile gegenüber den pulverförmigen Produkten bei der Herstellung von Wasch- und Reinigungsmitteln, vor allem, wenn das Phosphat den einzelnen Waschmittelkomponenten in fester Form zugemischt wird. Als Vorteile sind besonders die geringere Gefahr des Verklumpens des Wasch- und Reinigungsmittels sowie eine deutlich verminderte Staubbildung bei der Verarbeitung der Waschmittelkomponenten zu nennen.

Das nachträgliche Zumischen des NTPP bringt als weiteren Vorteil einen höheren Erhaltungsgrad des Triphosphats mit sich, was bei einer Reduzierung des Gesamtphosphatanteils im Waschmittel, wie sie neuerdings angestrebt wird, von Bedeutung ist.

Es wurden daher bereits in der Vergangenheit Anstrengungen unternommen, vor allem NTPP in Granulatform herzustellen. So wird z. B. in der DE-C 20 08 495 ein Verfahren zur Herstellung von körnigem Alkalipolyphosphat beschrieben, bei welchem man Alkalitriphosphat bestimmter Korngröße unter Aufsprühen einer wäßrigen Alkaliorthophosphatlösung granuliert, das Granulat trocknet und durch Erhitzen auf Temperaturen zwischen 300 und 600 °C calciniert. Diese Verfahrensweise führt zwar zu einem NTPP-Granulat gewünschter Körnung und Eigenschaften, jedoch stellen die im Anschluß an die Granulierung erfolgende Trocknung und Calcinierung energieintensive Verfahrensschritte dar, die gerade in einer Zeit steigender Energiekosten eingespart werden sollten.

Eine ähnliche Verfahrensweise wie in der DE-C-20 08 495 wird auch in der DE-A-25 15 141 beschrieben. Es wird ebenfalls die Granulierung des NTPP durch Aufsprühen einer wässerigen Alkaliorthophosphatlösung bestimmter Konzentration durchgeführt und anschließend das Granulat bei 300 bis 600 °C calciniert.

Weiterhin ist auch gemäß DE-A-2 454 448 und 20 46 658 die Herstellung verschiedener Mischgranulate bekannt, die aus mehreren in Waschmitteln enthaltenen Bestandteilen aufgebaut sind, so z. B. aus NTPP und Alkalisilikat. Diese Mischgranulate haben aber den großen Nachteil, daß der Verarbeiter unnötig eingeschränkt wird im Mischungsverhältnis der Bestandteile seines Produktes, daß er unter Umständen sogar unerwünschte Bestandteile in sein Produkt aufnehmen muß oder daß er zusätzlich zu einem solchen Granulat noch die Einzelbestandteile in der erforderlichen Menge hinzufügen muß, was weitere Lagerkapazität erfordert.

Erwünscht ist daher ein Granulat, das nur aus Phosphatsalzen besteht und durch einfache Granulierung ohne anschließende weitere Verfahrensschritte wie Trocknung, Calcinierung und dergleichen hergestellt werden kann. Bisher gelangte man nämlich zu solchen Granulaten nur dadurch, daß man mehr als die zur Bildung der entsprechenden Hydrate notwenige Menge Wasser hinzufügte, mit Hilfe des überschüssigen Wassers granulierte und daher anschließend nicht nur trocknen, sondern wegen der besonders beim Natriumtriphosphat beobachteten Hydrolyse auch noch calcinieren mußte. Dies ist eine sehr energie-aufwendige Arbeitsweise.

Es wurde nunmehr gefunden, daß man Alkalidi- oder -triphosphate granulieren kann, ohne das Granulat anschließend trocknen und calcinieren zu müssen, wenn man als Granulierhilfsmittel eine wäßrige Ammoniumpolyphosphatlösung verwendet und dabei die Wassermenge derart bemißt, daß sie höchstens zur Dekahydrat- bzw. Hexahydratbildung des Di- bzw. Triphosphates ausreicht.

Gegenstand der Erfindung ist somit ein Verfahren zur Herstellung von granulierten, teilweise oder vollkommen hydratisierten Alkalidi- oder -triphosphaten, bei dem man pulverförmige, wasserfreie oder teilweise hydratisierte Alkalidi- oder -triphosphate in Gegenwart von Wasser sowie einem von den Alkalidi- oder -triphosphaten verschiedenen Phosphatsalz intensiv mischt und granuliert, welches dadurch gekennzeichnet ist, daß man Alkalidi- oder -triphosphate mit einem Anteil an einer Kornfraktion von $< 0,045$ mm von mindestens 20 %, einem Hydratationsgrad von weniger als 90 %, bezogen auf den theoretisch möglichen Hydratwassergehalt der Phosphate, in Gegenwart von Wasser in einer Menge, die höchstens eine vollkommene Hydratation der Alkalidi- oder -triphosphate bewirkt, sowie einem Ammoniumpolyphosphat intensiv mischt und granuliert wobei das Ammoniumpolyphosphat der allgemeinen Formel

$$H_{(n-m)+2}(NH_4)_mP_nO_{3n+1}$$

in welcher n einen ganzzahligen Durchschnittswert von 3 bis 1 000 ist, m eine ganze Zahl bis maximal n + 2 bedeutet und m/n zwischen 1,0 und 1,67 liegt, entspricht und in einer Menge von 0,5 bis 50 Gew.%,

bezogen auf die eingesetzte Wassermenge, verwendet wird.

Als Alkalidi- oder -triphosphate werden vorzugsweise wasserfreies oder teilweise hydratisiertes Tetranatriumdiphosphat bzw. Pentanatriumtriphosphat eingesetzt, wobei die pulverförmigen Substanzen eine Korngrößenverteilung von

| | | |
|---|---|---|
| 0,0 -0,045 | mm = | 20-100 % |
| 0,45-0,1 | mm = | 0- 70 % |
| > 0,1 | mm = | 0- 50 % |

aufweisen. Ein Anteil einer Kornfraktion < 0,045 mm von mehr als 20 % wirkt sich auf die Granulierung bezüglich des Durchsatzes vorteilhaft aus. Liegt der Anteil unter 20 %, so ist zu wenig Feinkorn vorhanden, um die Zwischenräume auszufüllen und das Granulat zu verfestigen.

Im Falle des Pentanatriumtriphosphats wirkt es sich auf das Verfahren ebenfalls günstig aus, wenn das wasserfreie Produkt bzw. der wasserfreie Anteil des teilhydratisierten Produktes einen Phase-I-Gehalt von mehr als 10 %, insbesondere 10 bis 50 %, Rest Phase-II und amorpher Anteil, aufweist, da dadurch die Granulierzeit verkürzt und damit der Durchsatz beschleunigt wird.

Das zum Einsatz gelangende teilweise hydratisierte Alkalidi- oder -triphosphat kann beispielsweise zu 0,1 bis 60 Gew.% hydratisiert sein, während der Rest wasserfrei ist.

Was die zur Granulierung erforderliche Wassermenge betrifft, so ist diese vorteilhafterweise derart zu bemessen, daß mindestens 10 Gew.% des granulierten Alkalidi- oder -triphosphates den theoretisch möglichen Hydratwassergehalt besitzen.

Die Durchführung des vorbeschriebenen Verfahrens kann beispielsweise derart erfolgen, daß man ein Gemisch aus dem wasserfreien oder teilweise hydratisierten Alkalidi- oder -triphosphat unter intensivem Mischen mit Wasser besprüht oder auf das vorgelegte Alkalidi- oder -triphosphat eine wässerige, 0,5 bis 20 gew.%ige Lösung oder Suspension des Ammoniumpolyphosphates aufsprüht. Hierbei beträgt die Menge des Ammoniumpolyphosphates vorzugsweise 0,5 bis 20 Gew.%, bezogen auf die eingesetzte Wassermenge. Der Granulierungsprozeß kann in üblichen, dafür geeigneten Vorrichtungen wie Granulierteller, Granuliertrommel, Mischer, Drehrohr, Wirbelschichttrockner und dergleichen durchgeführt werden. Die Granulierflüssigkeit wird dabei über eine Düse auf das feste Phosphat aufgesprüht, wobei das Wasser durch eine chemische Reaktion gebunden wird. Man erhält so durch Vermeidung eines Wasserüberschusses ein festes, trockenes Granulat, so daß sich eine nachträgliche Trocknung und Calcinierung des Granulates erübrigt.

Am Beispiel der Granulierung des Pentanatriumtriphosphates sei bemerkt, daß das erfindungsgemäß hergestellte Granulat einen Wassergehalt besitzt, der höchstens dem des Hexahydrates entspricht. Daher braucht es nach dem Granulieren weder getrocknet noch calciniert zu werden. Eine Hydrolyse des Triphosphats während des Granulierens tritt nicht ein, da durch die beim Granulieren entstehende Hydratationswärme 60 °C nicht überschritten werden. Eine Überprüfung des Granulats ergab die gleichen Triphosphatwerte wie im Ausgangsmaterial. Somit besitzt das Granulat einen hohen Triphosphatgehalt, was für den Verarbeiter von Vorteil ist. Trotz fehlender Trocknung und Calcinierung besitzt das Granulat eine hohe Festigkeit und kann daher Waschmittelformulierung im trockenen Zustand zugemischt werden. Beim Auflösen in Wasser neigt das Granulat nicht zur Klumpenbildung, wobei auch durch den Gehalt an Ammoniumpolyphosphat keine unlöslichen Anteile im Wasser beobachtet wurden, was im Falle des Einsatzes des Granulates in Waschmittel von Bedeutung ist.

Wird ein Granulat mit einer bestimmten Korngrößenverteilung gewünscht, so kann dieses aus dem beim Granulierungsverfahren unmittelbar anfallenden Produkt in einer Siebeinrichtung ausgesiebt werden. Feinteiliges oder gröberes Produkt als das Gewünschte kann nach Aufmahlen des gröberen Produktes erneut dem Granulierungsprozeß zugeführt werden. Vorteilhaft wird jedoch so verfahren, daß lediglich der Staubanteil vom Granulat nach Austrag aus der Granuliervorrichtung unmittelbar mit einer Klassier- bzw. Sortiereinrichtung abgetrennt wird und sofort erneut granuliert wird. Hierdurch wird nur granulatförmiges Produkt entnommen, welches sofort gelagert oder verpackt werden kann.

Für die Granulierung von Tetranatriumdiphosphat gelten grundsätzlich die gleichen Verfahrensbedingungen wie im Falle des Pentanatriumtriphosphats mit dem Unterschied, daß der Hydratwassergehalt des hydratisierten Diphosphats 10 Kristallwasser beträgt. Erfindungsgemäße Granulate aus Tetranatriumdiphosphat besitzen auch die gleichen vorteilhaften Eigenschaften, wie sie für das Pentanatriumtriphosphat beschrieben wurden.

Das erfindungsgemäße Verfahren wird durch die folgenden Beispiele näher erläutert.

Beispiel 1

Auf einem Drehteller mit einem Durchmesser von 1 m und einer Randhöhe von 10 cm, der 48° gegen die Horizontale geneigt war und sich mit einer Drehzahl von 50 Upm bewegte, wurde Pentanatriumtriphosphat mit Hilfe einer Lösung von APP in Wasser, die über eine Zweistoffdüse mit einer Bohrung von 2,3 mm unter Anwendung von Druckluft von 0,5 bar aufgesprüht wurde, granuliert. Das eingesetzte Natriumtriphosphat hatte nach vorherigem Glühen einen Glühverlust von 0,3 Gew.%, gemessen bei 500 °C. Der Anteil der Hochtemperaturmodifikation I im NTPP betrug 26 Gew.% und der Kornanteil

< 0,045 mm lag bei 63 %. Die dem Drehteller zugeführte NTPP-Menge pro Stunde, d. h. der Durchsatz, betrug 50 kg/h. Über obige Zweistoffdüse wurde gleichzeitig eine 4 gew.%ige Suspension von handelsüblichem APP mit einem mittleren Kondensationsgrad von 470 in Wasser in einer Menge zugegeben, daß das fertige Granulat einen Wassergehalt, bestimmt über den Glühverlust bei 500 °C, von 16,6 Gew.% aufwies. Die Temperatur auf dem Drehteller betrug während der Granulierung weniger als 40 °C. Dem Drehteller wurde über eine Sortiervorrichtung nur Granulat entnommen, während nichtgranulierte pulverförmige Anteile sofort wieder dem Teller zur erneuten Granulierung zugeführt wurden. Es wurde das Granulat A gemäß Tabelle 1 erhalten.

Beispiel 2

Es wurde wie in Beispiel 1 verfahren, jedoch wurde ein NTPP mit einem Glühverlust von 0,8 Gew.%, einem Anteil an Modifikation I von 26 Gew.% und einem Kornanteil < 0,045 mm von 56 % eingesetzt. Entsprechend Beispiel 1 wurde nunmehr eine 1,5 gew.%ige Lösung von APP in Wasser in einer Menge zugegeben, daß das fertige Granulat einen Wassergehalt von 13,0 Gew.% aufwies. Es wurden stündlich dem Drehteller 30 kg Granulat entnommen. Ohne anschließende Trocknung bzw. Calcinierung wurde ein NTPP-Granulat mit den in der Tabelle erläuterten Eigenschaften und gekennzeichnet als Produkt B erhalten.

Beispiel 3

Es wurde analog Beispiel 1 verfahren, jedoch wurde ein NTPP mit einem Glühverlust von 0,1 Gew.%, einem Anteil an Modifikation I von 50 Gew.% und einem Kornanteil < 0,045 mm von 90 % eingesetzt. Der Durchsatz betrug 25 kg/h. Das NTPP wurde mit einer 1,5 gew.%igen wäßrigen APP-Lösung besprüht, wobei sich im Granulat ein Wassergehalt von 21,5 Gew.% einstellte. Ohne das Granulat zu trocknen bzw. zu calcinieren besaß es die aus der Tabelle unter Granulat C ersichtlichen Eigenschaften.

Beispiel 4

Es wurde analog Beispiel 1 verfahren, jedoch wurde ein NTPP mit einem Glühverlust von 0,1 Gew.%, einem Anteil an Modifikation I von 50 Gew.% und einem Kornanteil < 0,045 mm von 46 % eingesetzt. Der Durchsatz betrug 50 kg/h. Das NTPP wurde mit einer 5 gew.%igen APP-Suspension in Wasser, wobei das APP einen Kondensationsgrad von 120 besaß, besprüht, bis ein Wassergehalt im Granulat von 14,0 Gew.% erreicht wurde. Ohne das Granulat zu trocknen bzw. zu calcinieren, besaß es die aus der Tabelle unter Granulat D ersichtlichen Eigenschaften.

Beispiel 5

Es wurde analog Beispiel 1 verfahren, wobei jedoch ein NTPP mit folgenden Eigenschaften eingesetzt wurde : Glühverlust 0,1 Gew.%, Modifikation I 29 Gew.%, Kornanteil < 0,045 mm 80 %. Das NTPP wurde mit einer 1,5 gew.%igen APP-Lösung besprüht, so daß ein Granulat mit einem Wassergehalt von 20,0 Gew.% erhalten wurde. Der Durchsatz betrug 15 kg/h. Das Granulat besaß die aus der Tabelle unter Granulat E ersichtlichen Eigenschaften.

Beispiel 6

Es wurde analog Beispiel 1 verfahren, jedoch wurde ein NTPP mit folgenden Eigenschaften eingesetzt : Glühverlust 0,1 Gew.%, Modifikation I 17 Gew.%, Kornanteil < 0,045 mm 90 %. Das NTPP wurde mit einer 1,5 gew.%igen APP-Lösung besprüht, so daß ein Granulat mit einem Wassergehalt von 16,6 Gew.% erhalten wurde. Der Durchsatz betrug 10 kg/h. Das Granulat besaß die aus der Tabelle unter Granulat F ersichtlichen Eigenschaften.

Beispiel 7

In einem Loedige-Mischer wurden stündlich 30 kg NTPP mit folgenden Eigenschaften granuliert :
Glühverlust 0,3 Gew.%, Modifikation I 26 Gew.%, Kornanteil < 0,045 mm 63 %. Über eine Zweistoffdüse wurde eine 5 gew.%ige wäßrige APP-Suspension auf das NTPP gesprüht, so daß das fertige Granulat einen Wassergehalt von 19,8 Gew.% besaß. Anschließend wurde aus dem Granulat mittels eines Siebes der Kornanteil < 0,1 mm sowie > 2,0 mm abgesiebt. Es wurde ein Produkt erhalten, das in der Tabelle als Granulat G gekennzeichnet ist.

Beispiel 8

Die Granulierung von NTPP wurde in einem Drehrohr, das mit 7,5 Upm betrieben wurde, durchgeführt. Dabei wurden in das Drehrohr stündlich 150 kg pulverförmiges NTPP mit folgenden Eigenschaften

zugegeben :

Glühverlust 1,0 Gew.%, Anteil an Modifikation I 23 Gew.% und Kornanteil < 0,045 mm 66 %. Auf das NTPP wurden pro Stunde 32 l einer 4 %igen wäßrigen APP-Suspension aufgesprüht. Das APP besaßt einen Kondensationsgrad von 257. Von dem aus dem Drehrohr abgezogenen Granulat wurde über eine Siebeinrichtung der Kornanteil > 2 mm und < 0,1 mm abgesiebt. Es wurden 120 kg NTPP-Granulat H mit den aus der Tabelle ersichtlichen Eigenschaften erhalten.

Beispiel 9

Es wurde analog Beispiel 1 verfahren, jedoch wurde Tetranatriumdiphosphat mit einem Glühverlust 0,1 Gew.% und einem Kornanteil von < 0,045 mm von 80 % eingesetzt. Über eine Zweistoffdüse wurde eine 4 %ige wäßrige Suspension von handelsüblichem APP mit einem mittleren Kondensationsgrad von 270 derart zugegeben, daß das Granulat einen Wassergehalt von 35,0 Gew.% besaß. Der Durchsatz an Granulat betrug 15 kg/h, wobei über ein Sieb mit einer Maschenweite von 0,1 mm das Granulat vom Unterkorn abgetrennt wurde. Auf diese Weise wurde ein Tetranatriumdiphosphatgranulat mit folgenden Eigenschaften erhalten :

| | |
|---|---|
| Glühverlust des Granulats | 35,0 Gew.% |
| Schüttgewicht | 571 g/l |
| Abrieb, bestimmt nach der Trommelmethode | 50 Gew.% |
| wasserunlöslicher Rückstand beim Lösen des Granulats im Wasser | 0,1 Gew.% |
| Korngrößenverteilung des Granulats > 1,6 mm | 26,5 % |
| 0,8-1,6 mm | 44,9 % |
| 0,4-0,8 mm | 15,4 % |
| 0,1-0,4 mm | 13,2 % |
| < 0,1 mm | 0,0 % |

Tabelle

| Eigenschaften des Granulats | Granulate A | B | C | D | E | F | G | H |
|---|---|---|---|---|---|---|---|---|
| NTPP-Gehalt berechnet als (% $P_2O_5$) | 95,3 | 95,6 | 96,1 | 96,3 | 95,8 | 95,4 | 95,3 | 95,7 |
| Phase-I-Gehalt (Gew.%) | 19 | 15 | — | 14 | — | 17 | — | 17 |
| Glühverlust beim Glühen bei 500 °C (Gew.%) | 16,6 | 13,0 | 21,5 | 14,0 | 20,0 | 16,6 | 19,8 | 16,8 |
| Schüttgewicht (g/l) | 700 | 667 | 632 | 643 | 610 | 650 | 800 | 614 |
| Abrieb (Gew.%)[1)] | 77 | 56 | 54 | 70 | 52 | 50 | 87 | 78 |
| Korngrößenverteilung > 1,6 mm | 15,6 | 16,4 | 17,2 | 14,1 | 16,8 | 18,9 | 6,8 | 9,8 |
| 0,8-1,6 mm | 69,1 | 59,8 | 66,3 | 59,7 | 59,2 | 63,5 | 60,0 | 49,9 |
| 0,4-0,8 mm | 13,0 | 19,1 | 10,4 | 21,2 | 22,1 | 14,6 | 28,3 | 27,1 |
| 0,1-0,4 mm | 2,0 | 4,2 | 4,3 | 4,5 | 1,6 | 2,8 | 4,9 | 13,2 |
| < 0,1 mm | 0,0 | 0,5 | 0,4 | 0,5 | 0,3 | 0,2 | 0,0 | 0,0 |
| Wasserunlöslicher Rückstand beim Lösen in Wasser (Gew.%) | < 0,1 | < 0,1 | < 0,1 | < 0,1 | < 0,1 | < 0,1 | < 0,1 | < 0,1 |

1) Trommelmethode : gemäß DE-PS 20 08 495, unter Verwendung eines 0,18 mm Prüfsiebes ; Rückstand auf dem Prüfsieb.

**Ansprüche**

1. Verfahren zur Herstellung von granulierten, teilweise oder vollkommen hydratisierten Alkalidi- oder -triphosphaten, bei dem man pulverförmige, wasserfreie oder teilweise hydratisierte Alkalidi- oder -triphosphate in Gegenwart von Wasser sowie einem von den Alkalidi- oder -triphosphaten verschiedenen Phosphatsalz intensiv mischt und granuliert, dadurch gekennzeichnet, daß man Alkalidi- oder -triphosphate mit einem Anteil an einer Kornfraktion von < 0,045 mm von mindestens 20 %, einem Hydratationsgrad von weniger als 90 %, bezogen auf den theoretisch möglichen Hydratwassergehalt der Phosphate, in Gegenwart von Wasser in einer Menge, die höchstens eine vollkommene Hydratation der Alkalidi- oder -triphosphate bewirkt, sowie einem Ammoniumpolyphosphat intensiv mischt und granuliert, wobei das Ammoniumpolyphosphat der allgemeinen Formel

$$H_{(n-m)+2}(NH_4)_mP_nO_{3n+1}$$

in welcher n einen ganzzahligen Durchschnittswert von 3 bis 1 000 ist, m eine ganze Zahl bis maximal n + 2 bedeutet und m/n zwischen 1,0 und 1,67 liegt, entspricht und in einer Menge von 0,5 bis 50 Gew.%, bezogen auf die eingesetzte Wassermenge, verwendet wird.

2. Verfahren nach Anspruch 1, dadurch gekennzeichnet, daß man wasserfreies oder teilweise hydratisiertes Tetranatriumdiphosphat oder Pentanatriumtriphosphat mit einer Korngrößenverteilung von

0,0 -0,045 mm = 20- 100 %
0,045-0,1 mm = 0- 70 %
> 0,1 mm = 0- 50 %

granuliert.

3. Verfahren nach Anspruch 1 oder 2, dadurch gekennzeichnet, daß das wasserfreie Pentanatriumtriphosphat einen Phase-I-Gehalt von mehr als 10 %, insbesondere 10 bis 50 %, Rest Phase-II und amorpher Anteil, aufweist.

4. Verfahren nach Anspruch 1 oder 2, dadurch gekennzeichnet, daß das eingesetzte, teilweise hydratisierte Alkalidi- oder -triphosphat zu 0,1 bis 60 Gew.% hydratisiert und der Rest wasserfrei ist.

5. Verfahren nach Anspruch 1 bis 4, dadurch gekennzeichnet, daß man die zur Granulierung erforderliche Wassermenge derart bemißt, daß mindestens 10 Gew.% des granulierten Alkalidi- oder -triphosphates den theoretisch möglichen Hydratwassergehalt besitzen.

6. Verfahren nach Anspruch 1 bis 5, dadurch gekennzeichnet, daß man zur Herstellung des Granulates ein Gemisch aus dem wasserfreien oder teilweise hydratisierten Alakalidi- oder -triphosphat und dem Ammoniumpolyphosphat unter intensivem Mischen mit Wasser besprüht oder auf das vorgelegte Alkalidi- oder -triphosphat eine wässerige Lösung oder Suspension des Ammoniumpolyphosphates aufsprüht.

7. Verfahren nach Anspruch 6, dadurch gekennzeichnet, daß man auf das vorgelegte Alakalidi- oder -triphosphat eine 0,5 bis 20 gew.%ige Lösung oder Suspension des Ammoniumpolyphosphates aufsprüht.

8. Verfahren nach Anspruch 1 bis 7, dadurch gekennzeichnet, daß man das Ammoniumpolyphosphat in einer Menge von 0,5 bis 20 Gew.%, bezogen auf die eingesetzte Wassermenge, verwendet.

**Claims**

1. Process for making granulated, partially or completely hydrated alkali metal diphosphates or triphosphates, wherein pulverulent, anhydrous or partially hydrated alkali metal diphosphates or triphosphates are intensively mixed and granulated in the presence of water and a phosphate salt other than the alkali metal diphosphate or triphosphate, which comprises : intensively mixing and granulating alkali metal diphosphates or triphosphates presenting a fraction of at least 20 % of particles with a size of less than 0.045 mm and a degree of hydration of less than 90 %, based on the phosphates' theoretical content of water of hydration, in the presence of a quantity of water at most necessary for completely hydrating the alkali metal diphosphates or triphosphates, and in the presence of an ammonium polyphosphate of the following general formula

$$H_{(n-m)+2}(NH_4)_mP_nO_{3n+1}$$

in which n stands for an integral average value of 3 to 1,000 m stands for a whole number of at most n + 2, and m/n is between 1.0 and 1.67, the ammonium polyphosphate being used in a proportion of 0.5 to 50 weight %, based on the quantity of water used.

2. Process as claimed in claim 1, wherein anhydrous or partially hydrated tetrasodium diphosphate or pentasodium triphosphate with the following particle size distribution :

up to 0.045 mm = 20-100 %
0.045-0.1 mm = up to 70 %
> 0.1 mm = up to 50 %

is granulated.

3. Process as claimed in claim 1 or 1, wherein the anhydrous pentasodium triphosphate contains more than 10 %, preferably 10 to 50 %, of phase-I material, the balance being phase-II material and amorphous material.

4. Process as claimed in claim 1 or 2, wherein the partially hydrated alkali metal diphosphate or triphosphate used is hydrated to an extent of 0.1 to 60 weight %, the balance being anhydrous.

5. Process as claimed in claims 1 to 4, wherein the quantity of water necessary for the granulation is selected so as to obtain granulated alkali metal diphosphate or triphosphate of which an at least

10 weight % proportion presents the theoretical content of water of hydration.

6. Process as claimed in claims 1 to 5, wherein the granulate is made by spraying water with thorough agitation on to a mixture of anhydrous or partially hydrated alkali metal diphosphate or triphosphate and ammonium polyphosphate, or by spraying an aqueous solution or suspension of ammonium polyphosphate on to the alkali metal diphosphate or triphosphate.

7. Process as claimed in claim 6, wherein an about 0.5 to 20 weight % solution or suspension of the ammonium polyphosphate is sprayed on to the alkali metal diphosphate or triphosphate.

8. Process as claimed in claims 1 to 7, wherein the ammonium polyphosphate is used in a proportion of 0.5 to 20 weight % based on the quantity of water used.

**Revendications**

1. Procédé de préparation de di- ou triphosphates alcalins granulés, partiellement ou complètement hydratés, dans lequel on mélange énergiquement et on granule des di- ou triphosphates alcalins pulvérulents anhydres ou partiellement hydratés, en présence d'eau et d'un sel phosphate autre que les di- ou triphosphates alcalins, qui est caractérisé en ce que l'on mélange énergiquement et on granule les di- ou triphosphates alcalins présentant une fraction de 20 % au minimum de particules d'une granulométrie inférieure à 0,045 mm et un degré d'hydratation inférieur à 90 %, par rapport à la teneur théorique en eau d'hydratation des phosphates, en présence d'une quantité d'eau au plus suffisante pour effectuer une hydratation parfaite des di- ou triphosphates alcalins et d'un polyphosphate d'ammonium de formule générale

$$H_{(n-m)+2}(NH_4)_mP_nO_{3n+1}$$

dans laquelle n est une valeur moyenne entière de 3 à 1 000, m est un nombre entier au plus égal à n + 2 et m/n est compris entre 1,0 et 1,67, utilisé en quantité de 0,5 à 50 % en poids, par rapport à la quantité d'eau utilisée.

2. Procédé selon la revendication 1, caractérisé en ce que l'on granule du diphosphate tétrasodique ou du triphosphate pentasodique anhydre ou partiellement hydraté présentant la répartition granulométrique suivante :

0,0 -0,045 mm = 20-100 %
0,045-0,1 mm = 0- 70 %
> 0,1 mm = 0- 50 %

3. Procédé selon la revendication 1 ou 2, caractérisé en ce que le triphosphate pentasodique présente une teneur en phase I supérieure à 10 %, en particulier de 10 à 50 %, le complément consistant en phase II et matière amorphe.

4. Procédé selon la revendication 1 ou 2, caractérisé en ce que le di- ou triphosphate alcalin partiellement hydraté est hydraté à un taux de 0,1 à 60 % en poids, le complément étant anhydre.

5. Procédé selon les revendications 1 à 4, caractérisé en ce que l'on choisit la quantité d'eau nécessaire pour la granulation de manière que 10 % en poids au moins du di- ou triphosphate alcalin présentent la teneur en eau d'hydratation théorique.

6. Procédé selon les revendications 1 à 5, caractérisé en ce que, pour la préparation du granulé, on projette de l'eau en agitant énergiquement sur un mélange du di- ou triphosphate alcalin anhydre ou partiellement hydraté et du polyphosphate d'ammonium, ou on projette une solution ou suspension aqueuse de polyphosphate d'ammonium sur le di- ou triphosphate alcalin chargé au préalable.

7. Procédé selon la revendication 6, caractérisé en ce que l'on projette sur le di- ou triphosphate alcalin une solution ou suspension à 0,5-20 % en poids de polyphosphate d'ammonium.

8. Procédé selon les revendications 1 à 7, caractérisé en ce que l'on utilise le polyphosphate d'ammonium à raison de 0,5 à 20 % en poids, par rapport à la quantité d'eau utilisée.